Europäisches Patentamt

European Patent Office

Office européen des brevets

(11) Publication number: **0 048 769**
**B1**

# EUROPEAN PATENT SPECIFICATION

(45) Date of publication of patent specification: **27.11.85**

(51) Int. Cl.⁴: **A 47 J 37/08**

(21) Application number: **80105918.9**

(22) Date of filing: **30.09.80**

(54) **Toaster.**

(43) Date of publication of application:
**07.04.82 Bulletin 82/14**

(45) Publication of the grant of the patent:
**27.11.85 Bulletin 85/48**

(84) Designated Contracting States:
**AT BE CH DE FR GB LI LU NL SE**

(56) References cited:
**GB-A- 765 014**
**US-A-2 546 464**
**US-A-2 555 697**
**US-A-2 773 441**
**US-A-3 026 790**

(73) Proprietor: **Guarnerio, Renato**
**Via G. Forni, 72**
**I-20161 Milano (IT)**

(72) Inventor: **Guarnerio, Renato**
**Via G. Forni, 72**
**I-20161 Milano (IT)**

(74) Representative: **Faggioni, Giovanmaria, Dr. et al**
**Fumero-Studio Consulenza Brevetti**
**Widenmayerstrasse 4/I**
**D-8000 München 22 (DE)**

Courier Press, Leamington Spa, England.

## Description

The invention relates to a toaster for the automatic lowering and lifting of slices of bread comprising a toaster frame, slice-carrying supports movable in a vertical direction upward and downward, two identical leverages positioned on opposed ends of said supports to move said supports and an electric motor to operate said leverages in parallel.

GB—A—76 50 14 discloses a toaster featuring automatic lowering and lifting of the slices of bread with slice-carrying supports movable in a vertical direction. The known toaster includes fixed vertical guides which have to be precisely machined and assembled.

The object of the invention is to provide a toaster which is simple in structure, cheaper in production and more reliable in use.

According to the invention this object is achieved in that each of the leverages is formed by three pairs of toggle-joint levers, hinged at one end to the frame and a pair of levers hinged to toggle pins of said pairs of toggle-joint levers, said supports carrying a crossbar at each end to which is attached the other end of said pair of toggle-joint levers.

Further features and advantages are indicated in the sub-claims.

The present invention will be better understood by a reading of the following description taking in conjunction with the accompanying drawings whereby:

Fig. 1 shows a schematic view of one of the sides of the toaster according to the present invention, without cover plate and motor unit;

Fig. 2 is a schematic view, in longitudinal section, of the same toaster with the slice-carrying supports in a raised position;

Fig. 3 is a preferred electric circuit for feeding and controlling the toaster according to the present invention; and

Figs. 4 and 5 show two different embodiments of said electric circuit.

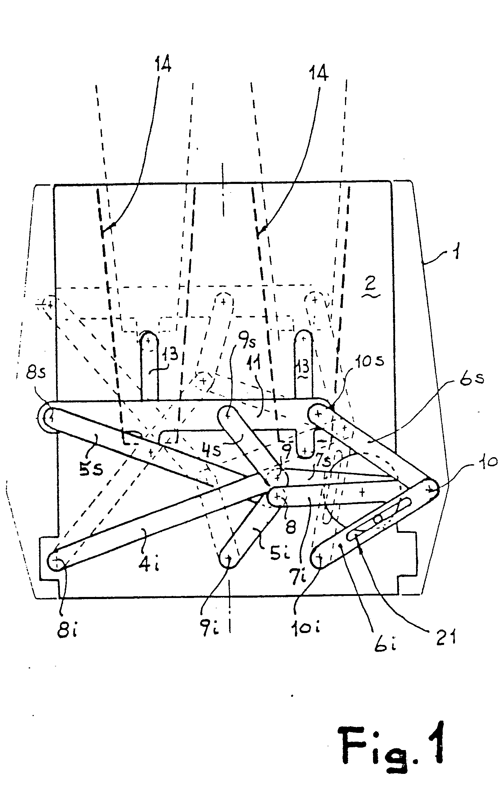

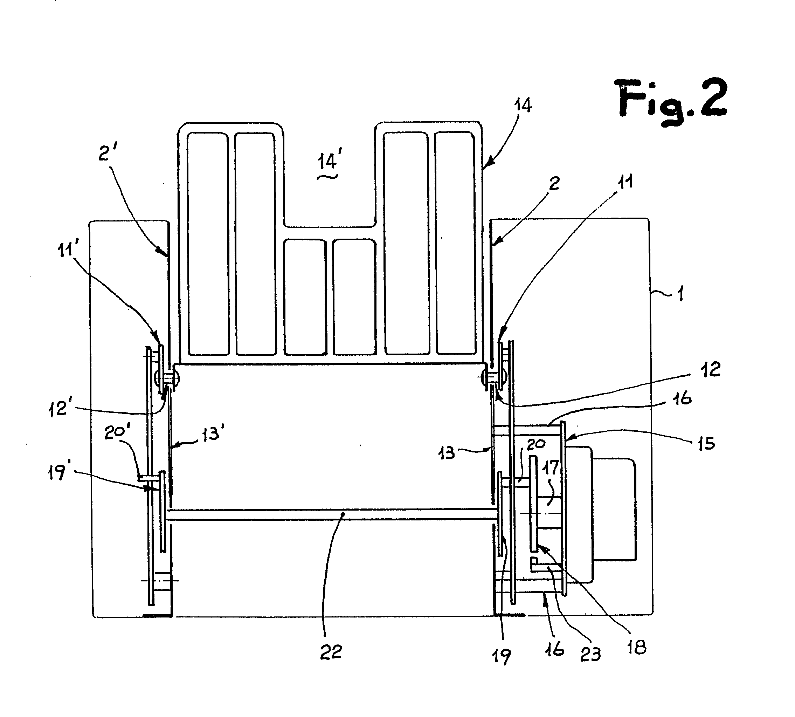

As shown in Figs. 1 and 2, the toaster according to the present invention is formed by an outer casing 1, to which are fixed two inner walls acting as a frame 2, 2' to support the equipment. The two walls with the respective mechanisms applied thereto are perfectly symmetrical, and the following description will hence be given with reference to the wall 2 shown in Fig. 1.

On the outer face of said wall and in its lower part there are hinged three pairs of toggle-joint levers formed by:

— three lower levers 4i, 5i and 6i, rotating on the fixed pins 8i, 9i and 10i, which are arranged along a horizontal line, and

— three upper levers 4s, 5s and 6s, of identical length with their respective lower lever, being hinged at 8s, 9s and 10s, onto a crossbar 11 for the slice-carrying supports.

Provision is also made for a pair of levers 7i and 7s, which are hinged to the previous levers by the three mobile hinges 8, 9 and 10, forming the toggles of the heretofore described toggle-joint levers 4i—4s, 5i—5s and 6i—6s, respectively.

The set of pairs of levers 4, 5, 6 and 7, and the supporting crossbar 11, form an articulated leverage allowing the crossbar 11 to move up and down, always remaining parallel to itself and to the horizontal line passing through the three pins 8i, 9i and 10i.

The lower parts of the crossbar 11 and the similar crossbar 11' of the articulated leverage on the wall 2' are provided with guiding pins 12 and 12' respectively, which slide in vertical guide slots 13 and 13', formed on said walls. Said pins are designed to support the slice-carrying supports 14, which therefore follow the movement imparted by the leverage to the supporting crossbars 11 and 11'.

The movement of the whole leverage is controlled by an electric motor, through a reduction gear with high speed reduction. The geared motor M is mounted onto a support plate 15, fixed to the wall 2 through a set of spacers 16. A cam disc 18 is keyed onto the shaft 17 of said geared motor M, said cam disc 18 being connected, through an eccentric pin 20, to a disc 19 which faces the cam itself and is coaxial thereto. The cam disc 18 and the disc 19 are arranged on opposite sides in respect of the leverage, provided on the wall 2, and the pin 20 connecting them crosses a longitudinal slot 21 formed in the lever 6i (see Fig. 1). An identical disc 19' having a pin 20' is provided between the wall 2' and the articulated leverage and said wall, and is connected to the disc 19 by means of a shaft 22. The rotation of the discs 19 and 19' — controlled by the geared motor M, through the cam disc 18 and the pin 20 — causes, through the cooperation between pins 20, 20' and slots 21, 21', the shifting of the levers 6i and 6i' and of the whole leverage connected thereto, and consequently the lifting or lowering of the slice-carrying supports 14 between the two end positions shown in Fig. 1 (which correspond to the two positions in which the lever 6i is substantially tangent — on one side and, respectively, on the other side — to the disc 19).

The cam disc 18, while rotating, operates a switch 23, the working of which will become clearer hereinafter.

The electric circuit for feeding and controlling the heretofore illustrated device will now be described in detail, and some possible embodiments thereof will also be shown.

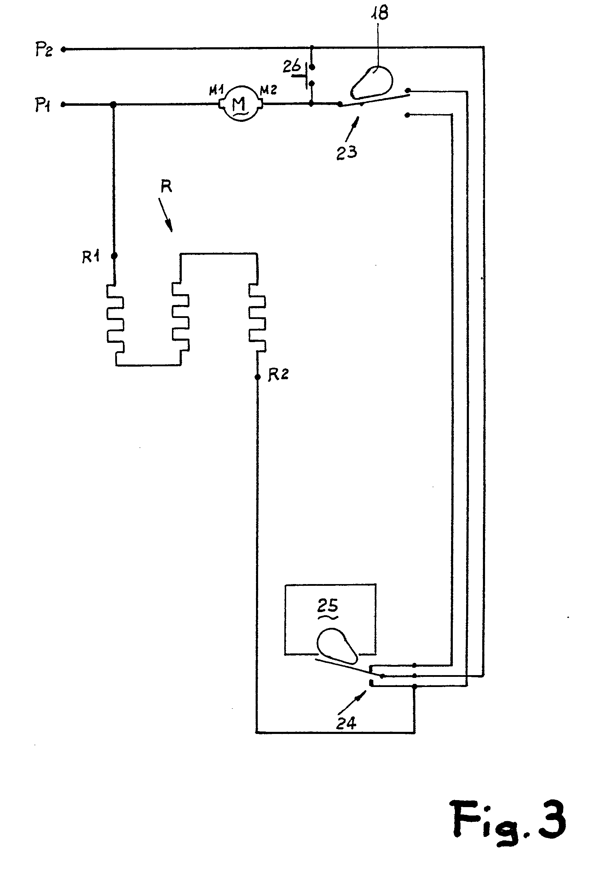

As shown in Fig. 3, the electric circuit comprises the geared motor M and the group of toasting resistances R. The geared motor and the resistances are connected to the pole P1 with their respective terminals M1 and R1. The pole P2 is connected to the contactor of a first switch 24, the two contacts of which are bridge connected with the equivalent contacts of a second switch 23, the contactor of which is connected to the terminal M2. The pole R2 is directly connected to one of the two bridge circuits which connect said first and second switches 23 and 24. The first switch 24 is operated by a manual timer 25 of known type. A push button 26 is finally provided for closing at any time the circuit feeding the geared motor M.

The working of the heretofore illustrated equipment according to the present invention will now be shortly described.

In a position of rest, the toaster 1 is kept with its slice-carrying supports 14 in a lowered position. At the moment of use, after connection to the electric network, by pressing the push button 26, the geared motor M starts to work; as previously specified, said geared motor M operates the leverages and the crossbars 11, 11' supporting the supports 14, which latter are thus driven upwards, outside the apparatus, with a gradual movement. At this stage, the slices of bread to be toasted are introduced therein and the desired toasting time is set on the timer 25. The timer 25 immediately closes the switch 24 and current is hence fed to the toasting resistances R as well as to the geared motor M. The slice-carrying supports 14 start to move down when the cam disc 18, fixed to the reduction gear and appropriately shaped, operates the second switch 23 disconnecting the geared motor M. At this point, the slices to be toasted are within the toasting chamber of the toaster, wherein they stay until the timer 25, at the end of the planned toasting time, again operates the first switch 24 bringing them back to the initial position. At this stage, the resistances R are at once disconnected, while — because of the position reached by the switch 23 — the geared motor M is fed, thereby allowing the removal of the toasted slices from the casing 1 of the toaster and leaving the apparatus ready for a new toasting cycle.

It should be noted that the slice-carrying supports 14 are formed with a central window 14', allowing an easier grip of the toasted slices of bread.

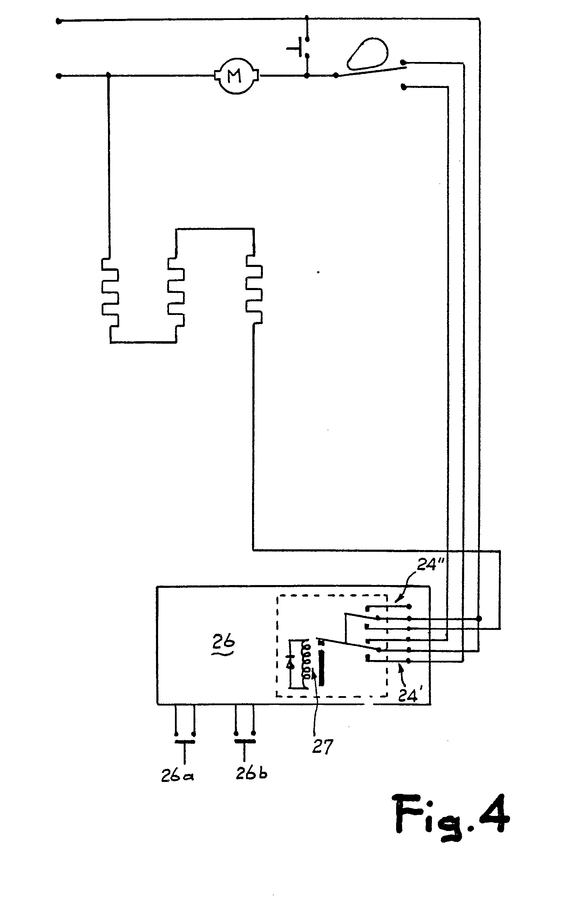

In the embodiment shown in Fig. 4, the manual timer 25 is replaced by an electronic timer 26 which, through a relay 27, operates the first switch 24. In the embodiment shown in Fig. 4, the first switch 24 has been replaced by a switch 24' which controls only the circuit of the geared motor M, and by a switch 24' which controls only the circuit of the resistances R. The electronic timer 26 is provided with two external push buttons 26a and 26b, the first of which operates the relay, while the second one is used to interrupt at once the automatic cycle.

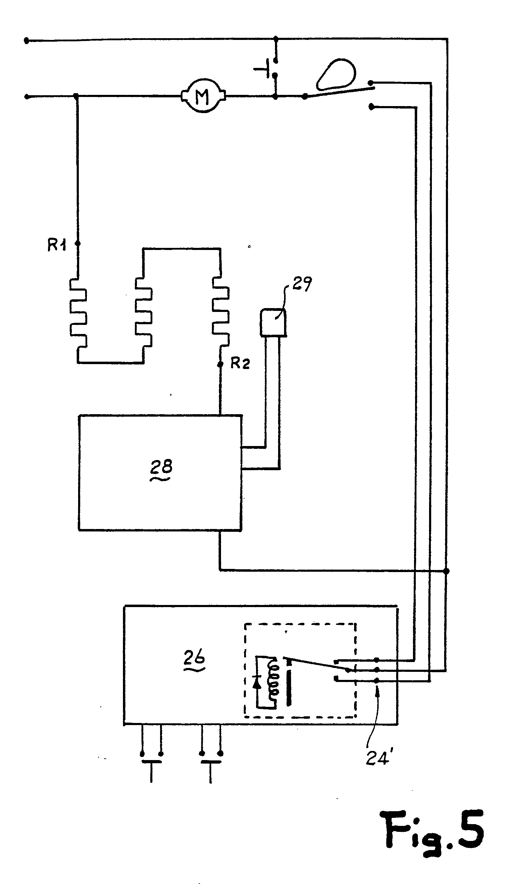

Finally, in the last embodiment shown in Fig. 5, the terminal R2 of the resistances is connected to the pole P2 of the network through a thermostatic switch 28 having a sensor 29 placed inside the toasting chamber of the toaster. In this latter case, when the general switch (not shown) is turned on, the resistances remain connected and they are automatically controlled by the thermostatic switch 28, which thus maintains a desired constant toasting temperature within the toasting chamber. This last embodiment is obviously particularly useful for toasters in constant or frequent use, as may actually be the case in public refreshment-rooms.

## Claims

1. Toaster for the automatic lowering and lifting of slices of bread comprising a toaster frame (2, 2'); slice-carrying supports movable in a vertical direction upward and downward; two identical leverages positioned on opposed ends of said supports (14) to move said supports (14) and an electric motor (M) to operate said leverages in parallel, characterized in that each of the leverages is formed by three pairs of toggle-joint levers (4, 5, 6), hinged at one end to the frame (2, 2') and a pair of levers (7) hinged to toggle pins (8, 9, 10) of said pairs of toggle-joint levers (4, 5, 6), said supports (14) carrying a crossbar (11) at each end to which is attached the other end of said pair of toggle-joint levers (4, 5, 6).

2. Toaster as claimed in claim 1, characterized in that said electric motor (M) controls the leverage moving the support (14) through a reduction gear with high speed reduction.

3. Toaster as claimed in claim 1 or 2, characterized in that one of the toggle-joint linkages comprises a longitudinal slot (21), in which slides a rotating pin (20) for operating said leverage, said pin (20) being mounted axially projecting from the periphery of a disc (18) fixed to the shaft (17) of the reduction gear, said disc (18) being coplanar to the plane of the movement of the leverage.

4. Toaster as claimed in claim 3, characterized in that said disc (18) carrying the pin (20) is in the form of a cam disc, and in which two additional discs (19, 19,') are further provided, said two discs being parallel to said cam disc (18) and being keyed onto a common shaft (22) which is coaxial to the shaft (17) of the reduction gear, said rotating pin (20) forming the connection between said cam disc (18) and a first of the additional discs (19), while a second rotating pin (20') is fixed to the second additional disc (19'), symmetrically to the first, said two rotating pins engaging two respective longitudinal slots (21, 21') of the two leverages.

5. Toaster as claimed in any one of claims 1—4, characterized in that said crossbars (11) of the support are provided with pins (12) perpendicular thereto, said pins (12) sliding into vertical guide slots (13) provided in the frame (2, 2') of the toaster.

6. Toaster according to any one of claims 1—5 comprising an electric circuit, characterized in that toasting resistances (R) and the motor (M) are connected in parallel, with a respective terminal (M1, R1) connected directly to a first pole (P1) of the circuit, the second pole (P2) of the circuit being alternatively connectable to one or the other of the two contacts of a first switch (24), said two contacts being in parallel with two equivalent contacts of a second switch (23), these latter being in turn alternatively connectable with the other terminal (M2) of the motor (M), while the other terminal (R2) of the resistances (R) is connected to one of the two lines connecting said switches (23, 24).

7. Toaster as claimed in claim 6, characterized in that said first switch (24) is operated by a timer (25) with manual or electronic control.

8. Toaster as claimed in claim 6 or 7, characterized in that said second switch (23) is operated by the cam disc (18) keyed onto the shaft (17) of the reduction gear of the motor (M).

9. Toaster as claimed in any one of the claims 6—8, characterized in that a manually operated push button (26) is provided for closing the circuit feeding the motor (M).

10. Toaster as claimed in any of the claims 6—9, characterized in that the other terminal of said resistances (R) is directly connected to the second pole (P2) of the circuit through a switch (24) controlled by said electronic timer (25).

11. Toaster as claimed in any one of the claim 6—10, characterized in that the other terminal of said resistances (R) is directly connected to the second pole (P2) of the circuit through a thermostatic switch (28) having a sensor (29) placed inside the toasting chamber of the toaster.

## Patentansprüche

1. Toaster zum automatischen Senken und Heben von Brotscheiben, der einen Toasterrahmen (2, 2'), in einer vertikalen Richtung nach oben und nach unten bewegliche, die Scheiben tragende Stützen, zwei identische, an einander gegenüberliegenden Enden der Stützen (14) angeordnete Gestänge zum Bewegen der Stützen (14) und einen Elektromotor (M) zum parallelen Führen der Gestänge aufweist, dadurch gekennzeichnet, daß jedes der Gestänge durch drei Paare von Kniehebeln (4, 5, 6), die an dem einen Ende des Rahmens (2, 2') angelenkt sind und einem Paar von Hebeln (7), die an Stiften (8, 9, 10) des Paares von Kniehebeln (4, 5, 6) angelenkt sind, gebildet werden, wobei die Stützen (14) an ihren jeweiligen Enden einen Querbalken (11) tragen, an denen der andere Endabschnitt des Paares von Kniehebeln (4, 5, 6) angebracht ist.

2. Toaster nach Anspruch 1, dadurch gekennzeichnet, daß der Elektromotor (M) das Gestänge durch Bewegen der Stütze (14) über ein Übersetzungsgetriebe mit einer hohen Geschwindigkeitsreduktion steuert.

3. Toaster nach Anspruch 1 oder 2, dadurch gekennzeichnet, daß die eine der Kniehebelverbindungen einen Längsschlitz (21) aufweist, in dem ein Drehstift (20) zum Steuern des Gestänges gleitet, wobei der Stift (20) axial von der auf einer Welle (17) des Reduktionsgetriebes befestigten Scheibe (18) ragend angeordnet ist und wobei die Scheibe (18) in der Bewegungsebene des Gestänges liegt.

4. Toaster nach Anspruch 3, dadurch gekennzeichnet, daß die den Stift (20) tragende Scheibe (18) als Nockenscheibe ausgebildet ist, und daß zwei weitere Scheiben (19, 19') vorgesehen sind, die parallel mit der Nockenscheibe (18) verlaufen und auf einer gemeinsamen, mit der Welle (17) des Reduktionsgetriebes koaxialen Welle (22) verkeilt sind, wobei der Drehstift (20) die Verbindung zwischen der Nockenscheibe (18) und einer ersten der weiteren Scheiben (19) bildet, während ein zweiter Drehstift (20') auf der zweiten weiteren Scheibe (19') symmetrisch zu dem ersten befestigt ist, und wobei die beiden Drehstifte jeweils in zwei Längsschlitze (21, 21') der beiden Gestänge eingreifen.

5. Toaster nach einem der Ansprüche 1 bis 4, dadurch gekennzeichnet, daß die Querbalken (11) der Stütze mit zu diesen senkrecht verlaufenden Stiften (12) versehen sind, die in in dem Rahmen (2, 2') des Toasters vorgesehenen, vertikal verlaufenden Führungsschlitzen (13) gleiten.

6. Toaster nach einem der Ansprüche 1 bis 5, mit einem elektrischen Schaltkreis, dadurch gekennzeichnet, daß der Toasterwiderstand (R) und der Motor (M) parallel miteinander geschaltet sind, wobei deren Anschlüsse (M1, R1) direkt mit einem ersten Pol (P1) des Schaltkreises verbunden sind, der zweite Pol (P2) des Schaltkreises mit dem einen oder den anderen Kontakt eines ersten Schalters (24) verbunden werden kann, wobei die beiden Kontakte parallel mit den beiden entsprechenden Kontakten eines zweiten Schalters (23) geschaltet sind, die wiederum mit den beiden Anschlüssen (M1) des Motors (M) verbundenwerden können, während der andere Anschluß (R2) des Widerstandes (R) mit dem einen der beiden die Schalter (23, 24) verbindenden Leitungen verbunden ist.

7. Toaster nach Anspruch 6, dadurch gekennzeichnet, daß der erste Schalter (24) von einem Zeitgeber (25) mit manueller oder elektronischer Steuerung betrieben wird.

8. Schalter nach Anspruch 6 oder 7, dadurch gekennzeichnet, daß der zweite Schalter (23) mittels einer Nockenscheibe (18), die auf der Welle (17) des Reduktionsgetriebes des Motors (M) verkeilt ist, betrieben wird.

9. Toaster nach einem der Ansprüche 6 bis 8, dadurch gekennzeichnet, daß eine manuell betätigte Taste (26) zum Schließen des den Motor (M) speisenden Schaltkreises vorgesehen ist.

10. Toaster nach einem der Ansprüche 6 bis 9, dadurch gekennzeichnet, daß der andere Anschluß des Widerstandes (R) über einen von dem elektronischen Zeitgeber (25) kontrollierten Schalter (24) direkt mit dem zweiten Pol (P2) des Schaltkreises verbunden ist.

11. Toaster nach einem der Ansprüche 6 bis 10, dadurch gekennzeichnet, daß der andere Anschluß des Widerstandes (R) über einen thermostatischen Schalter (28), der einen innerhalb der Toastkammer des Toaster angeordneten Sensor (29) aufweist, direkt mit dem zweiten Pol (P2) des Schaltkreises verbunden ist.

## Revendications

1. Grille pain pour l'abaissement et l'élévation automatique de tranches de pain comportant un bâti de grille pain (2, 2'); des supports porte-tranches mobiles en direction verticale vers le haut et vers le bas; deux jeux de leviers identiques placés aux extrémités opposées desdits supports (14) pour mouvoir les dits supports et un moteur électrique (M) pour manoeuvrer les dits jeux de leviers en parallèle, caractérisé en ce que chacun des jeux de leviers est constitué de trois paires de leviers en genouillère (4, 5, 6), pivotant à une extrémité sur le bâti (2, 2') et une paire de leviers (7) pivotant sur les genouillères (8, 9, 10) des paires de leviers en genouillère (4, 5, 6), les dits supports (14) portant une traverse (11) à chaque extrémité, où est attachée l'autre extrémité desdites paires de leviers en genouillère (4, 5, 6).

2. Grille pain selon la revendication 1, caractérisé en ce que ledit moteur électrique (M) commande le jeu de leviers mouvant le support (14) par l'intermédiaire d'un réducteur à forte réduction de vitesse.

3. Grille pain selon la revendication 1 ou 2, caractérisé en ce que l'une des branches de genouillère comporte une fente longitudinale (21), où coulisse un pion tournant (20) pour manoeuvrer ledit jeu de leviers, ce pion (20) étant monté, faisant saillie axiale de la périphérie d'un disque (18) fixé à l'arbre (17) du réducteur, ledit disque (18) étant coplanaire avec le plan de mouvement du jeu de leviers.

4. Grille pain selon la revendication 3, caractérisé en ce que ledit disque (18) portant le pion (20) est en forme de disque de came, et où deux disques additionnels (19, 19') sont en outre disposés, lesdits deux disques étant parallèles audit disque de came (18), et clavetés sur un arbre commun (22) qui est coaxial à l'arbre (17) du réducteur, ledit pion tournant (20) formant la connexion entre ledit disque came (18) et un premier des disques additionnels (19), tandis qu'un second pion tournant (20') est fixé au second disque additionnel (19'), symétriquement au premier, lesdits deux pions tournants s'engageant dans deux fentes longitudinales respectives (21, 21') des deux jeux de leviers.

5. Grille pain selon l'une quelconque des revendications 1—4, caractérisé en ce que lesdites traverses (11) du support sont pourvues de pions (12) perpendiculaires à celles-ci, ces pions (12) coulissant dans des fentes guides (13) verticales disposées dans le bâti (2, 2') du grille pain.

6. Grille pain selon l'une quelconque des revendications 1—5, comportant un circuit électrique, caractérisé en ce que des résistances de grillage (R) et le moteur (M) sont branchés en parallèle, avec une borne respective (M1, R1) reliée directement à un premier pôle (P1) du circuit, le second pôle (P2) du circuit étant reliable à l'un ou l'autre de deux contacts d'un premier commutateur (24), lesdits contacts étant en parallèle avec deux contacts équivalents d'un second commutateur (23), ces derniers étant de leur côté reliables à l'autre borne (M2) du moteur (M), tandis que l'autre borne (R2) des résistances (R) est reliée à l'une de deux lignes reliant ces commutateurs (23, 24).

7. Grille pain selon la revendication 6, caractérisé en ce que ledit premier commutateur (24) est manoeuvré par une minuterie (25) à commande manuelle ou électronique.

8. Grille pain selon la revendication 6 ou 7, caractérisé en ce que ledit second commutateur (23) est manoeuvré par le disque came (18) claveté sur l'arbre (17) du réducteur du moteur.

9. Grille pain selon une quelconque des revendications 6—8, caractérisé en ce qu'un poussoir (26) manoeuvré à la main est disposé pour fermer le circuit alimentant le moteur (M).

10. Grille pain selon une quelconque des revendications 6—9, caractérisé en ce que l'autre borne desdites résistances (R) est reliée directement au second pôle du circuit à travers un commutateur (24) commandé par ladite minuterie électronique (25).

11. Grille pain selon l'une quelconque des revendications 6—10, caractérisé en ce que l'autre borne desdites résistances (R) est reliée directement au second pôle (P2) du circuit à travers un commutateur thermostatique (28) ayant une sonde (29) disposée à l'intérieur de la chambre de grillage du grille-pain.

Fig.1

1

Fig.2

0 048 769

Fig.3

3

Fig.4

Fig.5